# EUROPEAN PATENT SPECIFICATION

(11) **EP 4 510 893 B1**
(45) Date of publication and mention of the grant of the patent: **22.07.2026**
(21) Application number: 23720798.0
(22) Date of filing: 17.04.2023
(51) Int. Cl.: A47J 31/20, A47G 19/16

(54) **FILTER INSERT FOR AN INFUSION DEVICE FOR PREPARING BEVERAGES, IN PARTICULAR COFFEE OR TEA, AND INFUSION DEVICE COMPRISING SUCH A FILTER INSERT**
FILTEREINSATZ FÜR EIN INFUSIONSGERÄT ZUR ZUBEREITUNG VON GETRÄNKEN, INSBESONDERE KAFFEE ODER TEE, UND INFUSIONSGERÄT MIT EINEM SOLCHEN FILTEREINSATZ
INSERT DE FILTRE POUR UN DISPOSITIF D'INFUSION PERMETTANT DE PRÉPARER DES BOISSONS, PLUS PARTICULIÈREMENT DU CAFÉ OU DU THÉ, ET DISPOSITIF D'INFUSION COMPRENANT UN TEL INSERT DE FILTRE

(30) Priority: 21.04.2022 DE 102022109660
(43) Date of publication of application: 26.02.2025
(60) Divisional application: 26182231.6
(73) Proprietor: PI-Design AG, 6340 Baar (CH)
(72) Inventor: BODUM, Jorgen, 6403 Küssnacht am Rigi (CH)
(74) Representative: Walther Bayer Faber Patentanwälte PartGmbB
(86) International application number: PCT/EP2023/059906
(87) International publication number: WO 2023/202979

(56) References cited:
- EP-A1- 0 497 726
- EP-A1- 2 586 344
- EP-A2- 2 496 118
- GB-A- 2 249 021
- US-A1- 2005 199 129
- US-B2- 8 516 949

## Description

The present application relates to a filter insert for an infusion device for preparing beverages, in particular coffee or tea. Furthermore, the present application relates to an infusion device with such a filter insert.

Infusion devices for preparing beverages are also called French presses or press filters. The infusion device has a container with an opening and a closed bottom, whereby the container usually has a cylindrical or prismatic shape. To prepare coffee or tea, the desired amount of insoluble material such as coffee powder or tea leaves is poured into the container and then hot water is poured over it. Then, the coffee powder or tea leaves are allowed to be extracted for a certain period of time. Thereafter, a plunger-filter assembly is placed in the container, which includes a piston rod and a press filter attached to the piston rod. Typically, the piston rod is slidably mounted in a lid that can be fitted over the opening and used to close the container. The press filter has a shape corresponding to the cross-section of the container, so that the press filter is laterally flush with the container. The press filter is pressed towards the bottom by means of the piston rod. As a result, the extracted coffee powder or tea leaves are separated from the coffee or tea and compressed in the area of the closed end. The coffee or tea filtered in this way can now be drunk. After the coffee or tea has been fully consumed, the plunger-filter assembly is withdrawn from the container and the compressed coffee powder or tea leaves are removed from the container. Documents showing the relevant prior art include DE 34 32 289 C1,

WO 02/067739 A1, EP 2 798 985 A1, WO 2010/031198 A2, EP 0 497 726 A1 and WO 96/035360 A1.

In such infusion devices, considerable forces act on the wall of the container, which in many cases is made of glass, when the press filter is pressed down. In extreme cases, there is a risk that the glass of the container will break, causing the hot water inside to escape and scald the user.

From WO 92/13475, US 2005/0199129 or WO 2007/082391, infusion devices for tea are known which have a filter insert that can be inserted into a container. A plunger-filter assembly is displaceable in the filter insert in order to press the leached tea leaves towards the bottom of the filter insert.

However, such a filter insert cannot be cleaned optimally. After brewing and pouring the beverage, the extracted tea leaves are at the bottom of the filter insert and cannot be easily removed from there. The same problem also arises, for example, when such a filter insert is used to prepare coffee.

The task of one embodiment of the present invention is to propose a filter insert for an infusion device with which it is possible by simple and inexpensive means to provide a remedy for the above-mentioned situation and, in particular, to create a filter insert which can be cleaned in a simple manner.

Furthermore, one embodiment of the present invention is based on the task of creating an infusion device which can be operated with such a filter insert.

This task is solved with the features indicated in claim 1.

Advantageous embodiments are the subject of the subclaims.

One embodiment of the invention relates to a filter insert for an infusion device for preparing beverages, in particular coffee or tea, wherein the filter insert comprises
- a wall having a first open end and a second open end and enclosing a cavity into which a material used to prepare the beverage is insertable, the wall having perforated sections with a plurality of filter openings, and
- a closure member which is detachably connectable or connected to the wall in the region of the first open end and with which the first open end can be closed.

As mentioned at the beginning, the insoluble material is located in the area of the first open end of the filter insert when the usually insoluble material has been moved towards the bottom of the container by means of a plunger-filter assembly. Also, in the event that the beverage in question is prepared without the aid of a plunger-filter assembly, insoluble material will accumulate over time at the first open end of the filter insert due to the weight force acting on it. Due to the fact that in the prior art the closure member is fixedly connected to the first end of the filter insert, cleaning of the filter insert is cumbersome. In contrast, according to the present application, the closure member can be detached from the filter insert, which makes the cleaning process much easier. In particular, it is possible in a simple manner to remove the insoluble material located in the region of the first open end from the filter insert through the first open end before the cleaning process is started. In this respect, a large part of the insoluble material can already be removed from the filter insert without the need for a cleaning liquid. Since accessibility to the cavity enclosed by the filter insert is improved, it can be prevented that the insoluble material adheres to hard-to-reach places and can only be removed with great difficulty. In this respect, the filter insert according to the proposal not only helps to simplify the cleaning process, but also contributes to reducing the volume of cleaning liquid required.

According to the invention, the filter insert comprises a connecting element which is non-detachably connected to the wall and into which the closure member is detachably insertable or inserted. As mentioned, the wall of the filter insert has perforated sections with a plurality of filter openings. For this purpose, it is convenient to manufacture the wall from a comparatively thin steel sheet. The connecting element can be designed on the one hand in such a way that it can easily be permanently connected to the steel sheet, and on the other hand in such a way that the closure member can be easily connected to and disconnected from the connecting element.

The sealing element is arranged to seal the closure member relative to the connecting element. Depending on the embodiment, it is not necessary to seal the closure member against the wall. Due to the filter openings already mentioned, beverage residues can escape from the filter insert via the wall anyway. Sealing the closure member against the connecting element, however, prevents beverage residues which accumulate in the volume enclosed by the closure member and the connecting element from running out in an uncontrolled manner and causing the contamination described above.

In a further embodiment, the closure member can be screwed into the connecting element. In this way, it is comparatively easy to connect and disconnect the closure member to and from the connecting element. In addition, because the closure member is screwed into the connecting element, the user of the filter insert can apply a sufficiently high force to the sealing element so that it can provide its sealing action to the required extent.

A further embodiment can be characterized by the fact that in the area of the second open end, a support flange projecting radially outward beyond the wall is attached to the wall. The support flange serves to place the filter insert on the container in which the beverage is prepared. In this respect, the position of the filter insert in relation to the container can be determined within certain limits during the infusion process. In particular, it is not necessary to hold the filter insert with one hand during the infusion process. This improves handling of the infusion device and increases operational safety.

One embodiment of the invention relates to an infusion device for preparing beverages, in particular coffee or tea, comprising
- a container with an opening, and
- a filter insert insertable into the container through the opening, according to any of the previous embodiments.

The technical effects and advantages that can be achieved with the proposed infusion device are the same as those discussed for the present filter insert. In summary, it should be noted that the filter insert can be thoroughly cleaned in a simple manner. Moreover, the volume required for cleaning the filter insert can be reduced, in particular because the improved accessibility to the cavity enclosed by the filter insert prevents coffee powder or tea leaves from adhering to inaccessible places.

In a further embodiment, it may be provided that the infusion device comprises a retaining ring which
- can be brought into contact with a contact edge surrounding the opening and
- has a holding section on which the filter insert can be brought into contact.

Using the retaining ring, the filter insert can be positioned relative to the container so that relative movement of the filter insert with respect to the container can be prevented or at least significantly reduced, particularly when pouring out the finished beverage. The pouring of the beverage is thus made safer. In addition, the retaining ring can be used in the manner of an adapter. This makes it possible to use the same filter insert for differently shaped containers. In this respect, it is not necessary to adapt the filter insert to different containers. Rather, it is sufficient to provide a retaining ring for each of the different containers, which can usually be manufactured in a simpler and less expensive manner than the filter insert.

A more advanced embodiment may provide that the retaining ring includes a sealing portion with which the retaining ring is sealable with respect to the container. The sealing section also causes the retaining ring to be positioned with respect to the container. This can prevent unintentional detachment of the retaining ring from the container. In addition, the beverage is prevented from escaping from the container in an uncontrolled manner during pouring.

According to a further developed embodiment, the retaining ring can have at least one through-opening through which the beverage can flow. In particular, when the retaining ring is sealed with respect to the container by means of the aforementioned sealing section, the through-openings enable the beverage to be poured out of the container at clearly defined points. This contributes to the operational safety of the infusion device, especially when the beverage is still very hot.

In a further embodiment, it may be provided that the infusion device comprises a plunger filter assembly which is insertable into the filter insert through the second open end and is slidable within the filter insert. With the plunger-filter assembly, it is possible to move the coffee powder or the tea leaves or other insoluble materials used to prepare a beverage towards the second open end of the filter insert and separate them from the rest of the beverage. Even though the filter openings already retain the insoluble material in the cavity of the filter insert, depending on the size of a particle of the insoluble material, it may not always be possible to reliably prevent a certain portion of the insoluble material from exiting the filter insert and thus entering the prepared beverage that is consumed by the user. Such particles are usually perceived as unpleasant by the user. Due to the use of the plunger-filter assembly, the proportion of particles leaving the cavity of the filter insert can be significantly reduced, thus increasing the enjoyment of the prepared beverage.

An advanced embodiment may specify that the plunger-filter assembly has a piston rod and the infusion device comprises a lid that can be brought into contact on the filter insert or on the holding section, the piston rod being slidably mounted in the lid. In this embodiment, the plunger-filter assembly can be operated very easily and conveniently, in particular because the piston rod is guided by the lid and thus performs a fixed movement.

Exemplary embodiments of the invention are explained in more detail below with reference to the accompanying drawings.
- Figure 1A: is a first embodiment of an infusion device according to the invention by means of a side view,
- Figure 1B: displays the embodiment shown in Figure 1A in a sectional view along the sectional plane A-A defined in Figure 1A,
- Figure 1C: is an enlarged view of the section X marked in Figure 1B,
- Figure 2A: shows a second embodiment of an infusion device according to the invention by means of a side view,
- Figure 2B: illustrates the embodiment shown in Figure 2A by means of a sectional view along the sectional plane B-B defined in Figure 2A,
- Figure 2C: is an enlarged view of the section Y marked in Figure 2B,
- Figure 3A: shows a third embodiment of an infusion device not belonging to the present invention by means of a sectional view following the view of Figure 1B, and
- Figure 3B: is an enlarged view of the section Z marked in Figure 3A.

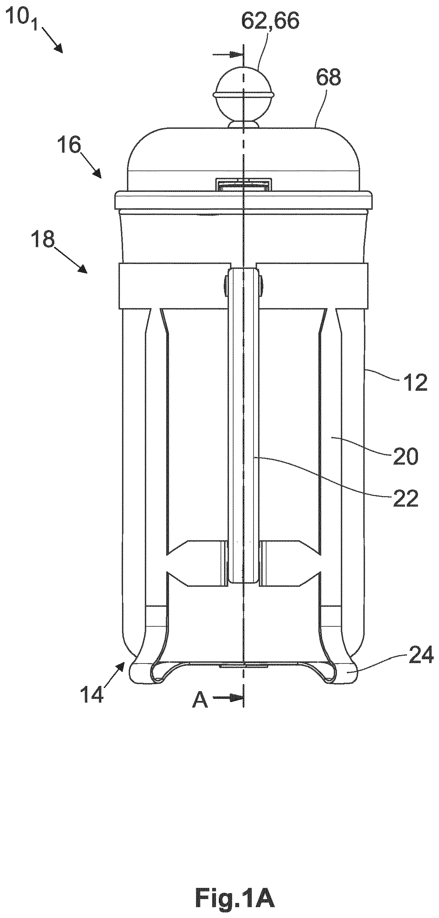

In Figures 1A to 1C, a first embodiment of an infusion device 10₁ according to the present invention is shown with reference to various illustrations. The infusion device 10₁ comprises a container 12, which in the illustrated embodiment is designed as a glass or plastic container, which is substantially cylindrical in shape, the container 12 having a closed bottom 14 and an opening 16. The container 12 can be inserted into a handling device 18, which has a receiving structure 20 on which a handle 22 is mounted. In this regard, the handling device 18 rests almost flush against the outside of the container 12 and includes feet 24 so that the infusion device 10₁ can be safely placed on a base not shown here.

The container 12 forms a pouring section 26 in the region of the opening 16, with which a beverage that has been prepared with the present infusion device 10₁ can be poured, for example, into a cup, which will be discussed in more detail below.

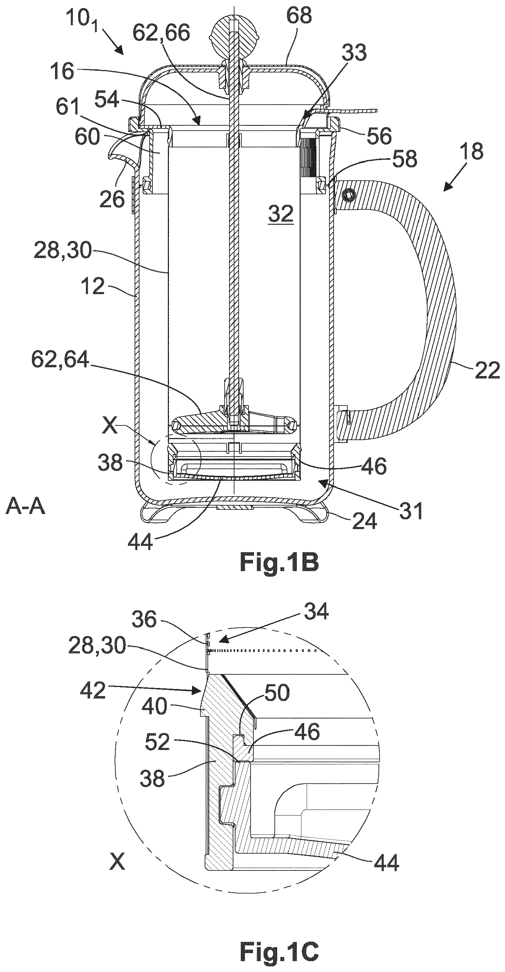

As can be seen in particular from Figure 1B, a filter insert 28 is inserted into the container 12 through the opening 16. The filter insert 28 includes a wall 30 that encloses a cavity 32. The wall 30 also has a substantially cylindrical shape and includes a first open end 31 and a second open end 33. Referring to the embodiment selected in Figures 1A to 1C, the first open end 31 is located in the region of the bottom and the second open end 33 is located in the region of the opening 16 of the container 12. The wall 30 comprises at least one perforated section 34, which comprises a plurality of filter openings 36 and can be seen in Figure 1C.

It can also be seen, in particular from Figure 1C, that a connecting element 38 is connected to the wall 30 of the filter insert 28 in the region of the first open end 31. In the illustrated embodiment, the connecting element 38 is fastened to the wall 30 of the filter insert 28 by a form closure. For this purpose, a projection 40 of the connecting element 38 engages in a mounting hole 42 of the wall 30.

Furthermore, the filter insert 28 comprises a closure member 44 which, in the illustrated embodiment, can be screwed into the connecting element 38, whereby the first open end 31 of the filter insert 28 can be closed. The screwing-in can be done, for example, in the manner of a bayonet lock. In addition, a sealing element 46 is attached to the connecting element 38 for which purpose the connecting element 38 has a correspondingly formed recess 50. The sealing element 46 seals the closure member 44 with respect to the connecting element 38. The connecting element 38 has a sealing surface 52 which is complementary in sections to the sealing element 46 and against which the sealing element 46 is pressed when the closure member 44 is screwed in. Due to the resulting deformation, the sealing element 46 seals the closure member 44 against the connecting element 38.

In the region of the second open end 33, the filter insert 28 is connected with a support flange 54 with which the filter insert 28 can be placed on the container 12 at the opening 16.

The support flange 54 is connected to the filter insert 28 by a snap connection, however, other ways to connect the support flange 54 and the filter insert 28 are conceivable. In the illustrated embodiment, however, the support flange 54 does not rest directly on the container 12, but on a retaining ring 56 which is introduced into the container 12 through the opening 16. The retaining ring 56 includes a holding portion 58 that fixes the retaining ring 56 with respect to the container 12, the holding portion 58 abutting the inner surface of the container 12. In the fully inserted condition, the holding portion 58 is located below the pouring portion 26 with reference to the illustration according to Figures 1A to 1C. Further, the retaining ring 56 includes a plurality of through openings 60 which are disposed in the region of the pouring portion 26 in the intended use of the infusion device 10₁. For receiving the support flange 54, the retaining ring 56 has a retaining section 61.

In addition, the infusion device 10₁ includes a plunger-filter assembly 62 comprising a press filter 64 and a piston rod 66 connected thereto. The piston rod 66 is slidably mounted in a lid 68, which can be fitted onto the retaining section 61 of the retaining ring 56 and which closes the opening 16 of the container 12. The lid 68 simultaneously fixes the filter insert 28 in the retaining ring 56.

The procedure for preparing a beverage is as follows: first, a typically insoluble material, for example coffee powder or tea leaves, is placed in the filter insert 28, which is closed at the first open end 31 with the closure member 44, but is open at the second open end 33. Subsequently, if not already done, the retaining ring 56 is inserted into the container 12 and then the filter insert 28 is placed on the retaining ring 56.

A liquid, in particular hot water, is now poured into the container 12 and waited until the insoluble material has been extracted to the desired extent. The lid 68 can already be placed on the retaining ring 56 during the extraction process. In doing so, the press filter 64 is positioned in the area of the second open end 33 of the filter insert 28. When the extraction process is to be completed, the piston rod 66 is moved towards the bottom 14 of the container 12, whereby the press filter 64 is inserted into the cavity 32 of the filter insert 28, thereby moving the insoluble material towards the area of the first open end 31 of the filter insert 28. Now, the infusion device 10₁ can be grasped by the handle 22 and the prepared beverage poured into a cup, for example. As the holding portion 58 seals the retaining ring 56 from the container 12, the beverage flows first through the through openings 60 and then through the pouring portion 26, with the insoluble material being retained by the filter insert 28 as the filter openings 36 are sized to be smaller than the vast majority of the particles of the insoluble material.

Once the container 12 has been completely emptied or no further beverage is to be consumed, the filter insert 28 is removed from the container 12. The filter insert 28 can be removed from the container 12 together with the lid 68 and the plunger-filter assembly 62 stored therein. However, it is also possible to first separate the plunger-filter assembly 62 together with the lid 68 from the filter insert 28 before removing the latter from the container 12. In any case, in order to be able to clean the filter insert 28, it is necessary to separate the plunger-filter assembly 62 from the filter insert 28. Once this is done, the insoluble material located in the region of the second open end 33 can be removed from the filter insert 28, for example by emptying the filter insert 28 over a waste garbage can. However, doing so will typically not succeed in removing all of the insoluble material. In order to be able to thoroughly clean the filter insert 28, the closure member 44 is separated from the remainder of the filter insert 28 so that both the first open end 31 and the second open end 33 are now open. Subsequently, both the filter insert 28 and the closure member 44 can be cleaned, for example, in a dishwasher or by hand. Due to the fact that the closure member 44 is detachably attached to the filter insert 28, the cavity 32 is easily accessible, especially in the area of the second open end 33, so that the insoluble material mainly located there can be easily removed.

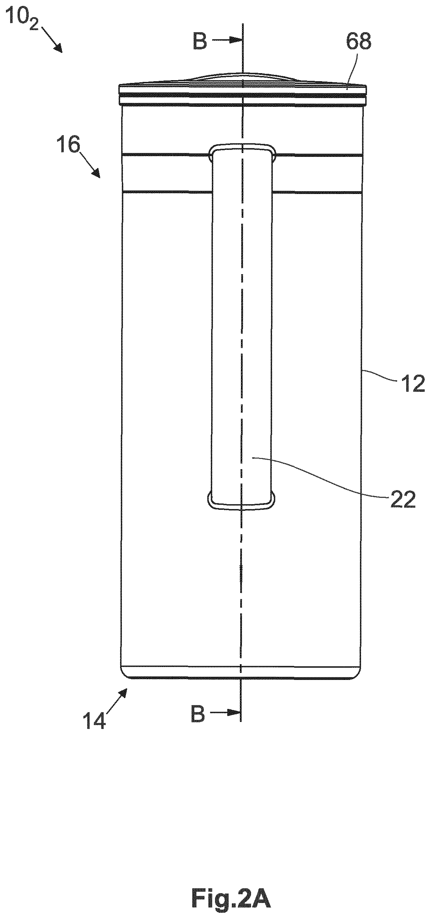

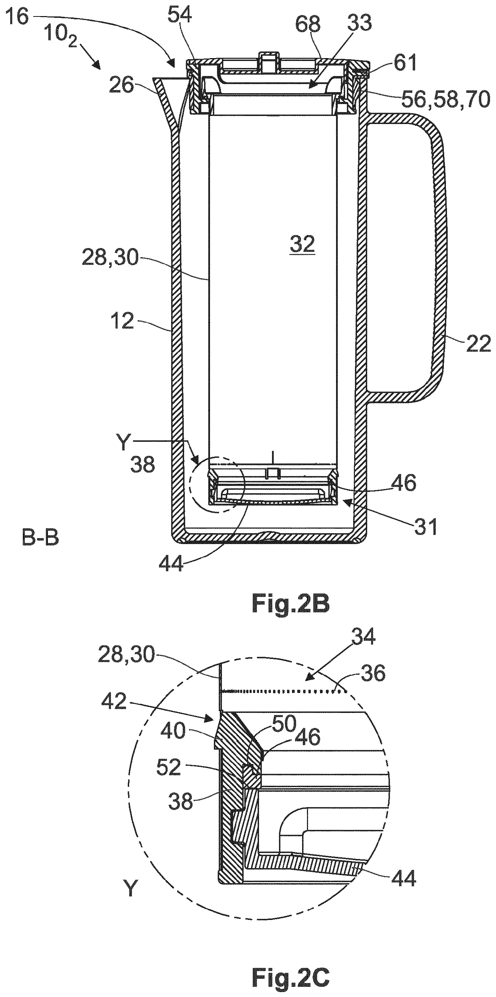

Figures 2A to 2C show a second embodiment of the infusion device 10₂ according to the present invention by means of various illustrations. The basic structure of the infusion device 10₂ according to the second embodiment example largely corresponds to that of the infusion device 10₁ according to the first embodiment example, which is why only the main differences will be discussed below. In particular, the filter insert 28 has essentially the same structure as in the first embodiment example and can thus be used for infusion devices according to the first and second embodiment with only slight modifications on the second open end 33.

While the infusion device 10₁ according to the first embodiment example is particularly suitable for the preparation of coffee, the infusion device 10₂ according to the second embodiment example is particularly suitable for the preparation of tea, although no strict separation is to be seen herein. In other words, it is also possible to prepare the respective other beverage with the respective embodiments of the infusion device 10. It should be noted that the filter insert 28 may also be used in other applications not shown herein.

The essential difference is that in the infusion device 10₂ according to the second embodiment example, no plunger-filter assembly 62 is provided. In this respect, there is no guide for the piston rod 66 of the plunger-filter assembly 62 in the lid 68. In addition, the container 12 of the infusion device 10₂ according to the second embodiment example has a different structure than the container 12 of the infusion device 10₁ according to the first embodiment example. In the infusion device 10₂ according to the second embodiment example, the container 12 is not made of glass, but of plastic, with the handle 22 being directly integrated into the container 12. Consequently, it is not necessary to use the handling device 18 described for the first embodiment example of the infusion device 10₁. The container 12 is configured to be placed securely on a support that is not shown.

As mentioned above, there is no guide for the piston rod 66 of the plunger-filter assembly 62 in the lid 68. Therefore, the retaining ring 56 also has a slightly different structure. Compared to the infusion device 10₁ according to the first embodiment, the retaining ring 56 of the infusion device 10₂ according to the second embodiment projects much less far into the container 12. As a result, the retaining ring 56 also does not have any through openings 60 because the beverage can flow directly into the pouring section 26.

The holding portion 58 of the retaining ring 56 comprises a plurality of protrusions 70 facing radially outwardly.

With the exception of the actuation of the plunger-filter assembly 62, the infusion device 10₂ according to the second embodiment example can be used in the same manner as described for the infusion device 10₁ according to the first embodiment example. As already noted, the filter insert 28 can be used for various infusion devices. To this end only slide modifications of the area of the second open end 33 need to be conducted. Thus, a modular approach is realized, keeping respective costs low without compromising the versatileness in the application.

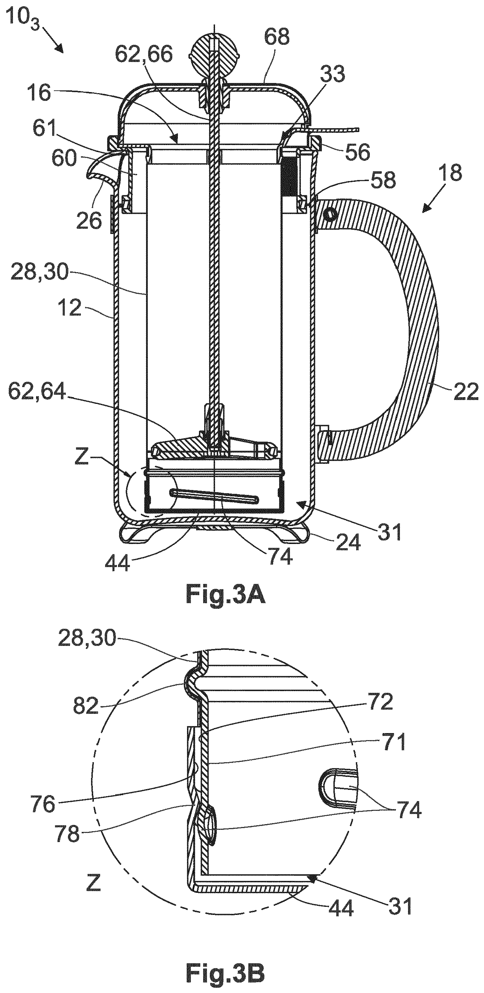

Figures 3A and 3B show a third embodiment of the infusion device 10₃ which does not belong to the present invention. Figure 3B is an enlarged view of the section Z indicated in Figure 3A. As the basic construction of the infusion device 10₃ of the third embodiment is to a large extent similar to the infusion device 10₁, 10₂ according to the first and second embodiment, only the important differences will be described in the following:
The infusion device 10₃ of the third embodiment is equipped with a fastening section 72 adjacent to the first open end 31. The fastening section 72 is formed by an intermediate part 71 which has a substantially cylindrical shape, the outer diameter of which is slightly smaller than the inner diameter of the remaining wall 30. The intermediate part 71 is connected to the wall 30 by a form closure that is formed by annular radially outwardly facing projections 82 of the intermediate part 71 and the wall 30. The wall thickness of the intermediate part 71 is higher than the wall thickness of the wall 30.

A plurality of first protrusions 74 is formed on the outer surface of the fastening section 72 of the intermediate part 71. The first protrusions 74 are slightly inclined with respect to the plain defined by the first open end 31.

On its inner surface the closure member 44 forms a counter-fastening section 76 complementary to the fastening section 72. A plurality of second protrusions 78 facing radially inwardly is formed on the counter-fastening section 76. The second protrusions 78 are also inclined in the same way as the first protrusions 74.

For connecting the closure member 44 to the wall 30, the closure member 44 is placed coaxially with the wall 30 and then moved towards the first open end 31. The closure member 44 is further moved along the longitudinal axis of the filter insert 28 such that the first protrusions 74 and the second protrusions 78 can interact with each other to form a form closure. Due to the inclination of the first protrusions 74 and the second protrusions 78 the closure member 44 can be turned around the longitudinal axis of the filter insert 28, thereby being moved along the longitudinal axis until it abuts to the first open end 31. Thereby, the closure member 44 is fastened to the filter insert 28 similar to a screw.

To disconnect the closure member 44 from the filter insert 28, the closure member 44 is turned in the opposite direction until the first protrusions 74 and the second protrusions 78 are out of engagement. After that the closure member 44 can be removed from the filter insert 28 by a movement along the longitudinal axis.

### List of reference signs

- 10: infusion device
- 10₁, 10₂, 10₃: infusion device
- 12: container
- 14: bottom
- 16: opening
- 18: handling device
- 20: receiving structure
- 22: handle
- 24: feet
- 26: pouring section
- 28: filter insert
- 30: wall
- 31: first open end
- 32: cavity
- 33: second open end
- 34: perforated section
- 36: filter opening
- 38: connecting element
- 40: projection
- 42: mounting hole
- 44: closure member
- 46: sealing element
- 50: recess
- 52: sealing surface
- 54: support flange
- 56: retaining ring
- 58: holding portion
- 60: through opening
- 61: retaining section
- 62: plunger-filter assembly
- 64: press filter
- 66: piston rod
- 68: lid
- 70: protrusions
- 71: intermediate part
- 72: fastening section
- 74: first protrusion
- 76: counter-fastening section
- 78: second protrusion
- 82: outwardly facing projection

## Claims

1. Filter insert (28) for an infusion device (10) for preparing beverages, in particular coffee or tea, wherein the filter insert (28) comprises
- a wall (30) having a first open end (31) and a second open end (33) and enclosing a cavity (32) into which a material used to prepare the beverage is insertable, the wall (30) having perforated sections (34) with a plurality of filter openings (36), and
- a closure member (44) which is detachably connectable or connected to the wall (30) in the region of the first open end (31) and with which the first open end (31) can be closed,
**characterized in that**
- the filter insert (28) comprises a connecting element (38) which is non-detachably connected to the wall (30) and into which the closure member (44) is detachably insertable or inserted,
- the filter insert (28) comprises a sealing element (46) which is arranged to seal the closure member (44) with respect to the connecting element (38).

2. Filter insert (28) according to claim 1,
**characterized in that** the closure member (44) can be screwed into the connecting element (38).

3. Filter insert (28) according to any one of the preceding claims,
**characterized in that** in the region of the second open end (33) a support flange (54) projecting radially outwardly beyond the wall (30) is fastened to the wall (30).

4. Infusion device (10) for preparing beverages, in particular coffee or tea, comprising
- a container (12) with an opening (16), and
- a filter insert (28) insertable into the container (12) through the opening (16) according to any one of the preceding claims.

5. Infusion device (10) according to claim 4, **characterized in that** the infusion device (10) comprises a retaining ring (56), which
- - can be brought into contact with the container (12) in the area of the opening (16) and
- - has a retaining section (61) on which the filter insert (28) can be brought into contact.

6. Infusion device (10) according to claim 5,
**characterized in that** the retaining ring (56) has a sealing portion (58) with which the retaining ring (56) can be sealed with respect to the container (12).

7. Infusion device (10) according to claim 6,
**characterized in that** the retaining ring (56) has at least one through opening (60) through which the beverage can flow.

8. Infusion device (10) according to any one of claims 4 to 7,
**characterized in that** the infusion device (10) comprises a plunger-filter assembly (62) which is insertable into the filter insert (28) through the second open end (33) and is slidable within the filter insert (28).

9. Infusion device (10) according to claim 8,
**characterized in that** the plunger-filter assembly (62) has a piston rod (66) and the infusion device (10) comprises a lid (68) which can be brought into contact on the filter insert (28) or on the retaining section (61), the piston rod (66) being displaceably mounted in the lid (68).

## Patentansprüche

1. Filtereinsatz (28) für eine Aufgussvorrichtung (10) zum Zubereiten von Getränken, insbesondere Kaffee oder Tee, wobei der Filtereinsatz (28) umfasst
- eine Wand (30) mit einem ersten offenen Ende (31) und einem zweiten offenen Ende (33), die einen Hohlraum (32) umschließt, in den ein zur Zubereitung des Getränks verwendetes Material einbringbar ist, wobei die Wand (30) perforierte Abschnitte (34) mit einer Vielzahl von Filteröffnungen (36) aufweist, und
- ein Verschlusselement (44), das im Bereich des ersten offenen Endes (31) lösbar mit der Wand (30) verbunden oder verbindbar ist und mit dem das erste offene Ende (31) verschließbar ist,
**dadurch gekennzeichnet, dass**
- der Filtereinsatz (28) ein Verbindungselement (38) umfasst, das unlösbar mit der Wand (30) verbunden ist und in welches das Verschlusselement (44) lösbar einsetzbar oder eingesetzt ist,
- der Filtereinsatz (28) ein Dichtungselement (46) aufweist, das derart angeordnet ist, dass es das Verschlusselement (44) gegenüber dem Verbindungselement (38) abdichtet.

2. Filtereinsatz (28) nach Anspruch 1,
**dadurch gekennzeichnet, dass** das Verschlusselement (44) in das Verbindungselement (38) einschraubbar ist.

3. Filtereinsatz (28) nach einem der vorherigen Ansprüche,
**dadurch gekennzeichnet, dass** im Bereich des zweiten offenen Endes (33) ein radial über die Wand (30) hinausragender Stützflansch (54) an der Wand (30) befestigt ist.

4. Aufgussvorrichtung (10) zur Zubereitung von Getränken, insbesondere Kaffee oder Tee, mit
- einen Behälter (12) mit einer Öffnung (16) und
- einen Filtereinsatz (28) gemäß einem der vorherigen Ansprüche, der durch die Öffnung (16) in den Behälter (12) einsetzbar ist.

5. Aufgussvorrichtung (10) nach Anspruch 4,
**dadurch gekennzeichnet, dass** die Aufgussvorrichtung (10) einen Haltering (56) umfasst, der
- im Bereich der Öffnung (16) mit dem Behälter (12) in Kontakt gebracht werden kann und
- einen Halteabschnitt (61) aufweist, an dem der Filtereinsatz (28) in Kontakt gebracht werden kann.

6. Aufgussvorrichtung (10) nach Anspruch 5,
**dadurch gekennzeichnet, dass** der Haltering (56) einen Dichtungsabschnitt (58) aufweist, mit dem der Haltering (56) gegenüber dem Behälter (12) abdichtbar ist.

7. Aufgussvorrichtung (10) nach Anspruch 6,
**dadurch gekennzeichnet, dass** der Haltering (56) mindestens eine Durchgangsöffnung (60) aufweist, durch die das Getränk fließen kann.

8. Aufgussvorrichtung (10) nach einem der Ansprüche 4 bis 7, **dadurch gekennzeichnet, dass** die Aufgussvorrichtung (10) eine Kolben-Filter-Baugruppe (62) umfasst, die durch das zweite offene Ende (33) in den Filtereinsatz (28) einsetzbar und innerhalb des Filtereinsatzes (28) verschiebbar ist.

9. Aufgussvorrichtung (10) nach Anspruch 8,
**dadurch gekennzeichnet, dass** die Kolben-Filter-Baugruppe (62) eine Kolbenstange (66) aufweist und die Aufgussvorrichtung (10) einen Deckel (68) umfasst, der mit dem Filtereinsatz (28) oder dem Halteabschnitt (61) in Kontakt gebracht werden kann, wobei die Kolbenstange (66) verschiebbar im Deckel (68) gelagert ist.

## Revendications

1. Insert de filtre (28) pour un dispositif d'infusion (10) destiné à préparer des boissons, en particulier du café ou du thé, dans lequel l'insert de filtre (28) comprend
- une paroi (30) présentant une première extrémité ouverte (31) et une deuxième extrémité ouverte (33) et renfermant une cavité (32) dans laquelle peut être inséré un produit utilisé pour préparer la boisson, la paroi (30) présentant des sections perforées (34) avec une pluralité d'ouvertures de filtre (36), et
- un élément de fermeture (44) qui peut être relié de manière amovible ou est relié à la paroi (30) dans la région de la première extrémité ouverte (31) et avec lequel la première extrémité ouverte (31) peut être fermée,
**caractérisé en ce que**
- l'insert de filtre (28) comprend un élément de connexion (38) qui est relié de manière non amovible à la paroi (30) et dans lequel l'élément de fermeture (44) peut être inséré ou est inséré de manière amovible,
- l'insert de filtre (28) comprend un élément d'étanchéité (46) qui est agencé pour rendre étanche l'élément de fermeture (44) par rapport à l'élément de connexion (38).

2. Insert de filtre (28) selon la revendication 1,
**caractérisé en ce que** l'élément de fermeture (44) peut être vissé dans l'élément de connexion (38).

3. Insert de filtre (28) selon l'une quelconque des revendications précédentes,
**caractérisé en ce que**, dans la région de la deuxième extrémité ouverte (33), une bride de support (54) faisant saillie radialement vers l'extérieur au-delà de la paroi (30) est fixée à la paroi (30).

4. Dispositif d'infusion (10) pour préparer des boissons, en particulier du café ou du thé, comprenant
- un récipient (12) avec une ouverture (16), et
- un insert de filtre (28) pouvant être inséré dans le récipient (12) à travers l'ouverture (16) selon l'une quelconque des revendications précédentes.

5. Dispositif d'infusion (10) selon la revendication 4, **caractérisé en ce que** le dispositif d'infusion (10) comprend une bague de retenue (56) qui
- peut être mise en contact avec le récipient (12) dans la zone de l'ouverture (16) et
- comporte une section de retenue (61) sur laquelle l'insert de filtre (28) peut être mis en contact.

6. Dispositif de perfusion (10) selon la revendication 5, **caractérisé en ce que** la bague de retenue (56) comporte une partie d'étanchéité (58) avec laquelle la bague de retenue (56) peut être rendue étanche par rapport au récipient (12).

7. Dispositif d'infusion (10) selon la revendication 6, **caractérisé en ce que** la bague de retenue (56) comporte au moins une ouverture traversante (60) à travers laquelle la boisson peut s'écouler.

8. Dispositif d'infusion (10) selon l'une quelconque des revendications 4 à 7,
**caractérisé en ce que** le dispositif d'infusion (10) comprend un ensemble piston-filtre (62) qui peut être inséré dans l'insert de filtre (28) à travers la deuxième extrémité ouverte (33) et qui peut coulisser à l'intérieur de l'insert de filtre (28).

9. Dispositif d'infusion (10) selon la revendication 8, **caractérisé en ce que** l'ensemble piston-filtre (62) comporte une tige de piston (66) et le dispositif d'infusion (10) comprend un couvercle (68) qui peut être mis en contact avec l'insert de filtre (28) ou avec la section de retenue (61), la tige de piston (66) étant montée de manière déplaçable dans le couvercle (68).
